# EUROPÄISCHE PATENTSCHRIFT

(11) **EP 3 158 012 B1**
(45) Veröffentlichungstag und Bekanntmachung des Hinweises auf die Patenterteilung: **19.02.2020**
(21) Anmeldenummer: 15731276.0
(22) Anmeldetag: 17.06.2015
(51) Int. Cl.: C09D 5/18

(54) **BRANDSCHUTZ-ZUSAMMENSETZUNG UND DEREN VERWENDUNG**
FIRE-RESISTANT COMPOUND AND ITS UTILISATION
COMPOSITION IGNIFUGE ET SON UTILISATION

(30) Priorität: 18.06.2014 EP 14172909
(43) Veröffentlichungstag der Anmeldung: 26.04.2017
(73) Patentinhaber: Hilti Aktiengesellschaft, 9494 Schaan (LI)
(72) Erfinder: LANG, Martin, 82152 Planegg (DE); SIMON, Sebastian, 86807 Buchloe Lindenberg (DE); MARAUSKA, Juliane, 72766 Reutlingen (DE)
(86) Internationale Anmeldenummer: PCT/EP2015/063538
(87) Internationale Veröffentlichungsnummer: WO 2015/193342

(56) Entgegenhaltungen:
- CN-A- 101 831 116
- DE-A1- 19 649 749
- JP-B2- 5 208 046

## Beschreibung

Die vorliegende Erfindung betrifft eine Zusammensetzung, insbesondere eine ablativ wirkende Zusammensetzung, die ein Bindemittel auf Thiol-En-Basis enthält, sowie deren Verwendung für den Brandschutz, insbesondere für die Beschichtung von Bauteilen, wie Stützen, Trägern, Fachwerkstäben, Dämmsystemen, z.B. Weichschotts, Kabel, Kabelbündeln oder Kabeltrassen zur Erhöhung der Feuerwiderstandsdauer.

Bei Bränden bilden Kabeltrassen aus mehreren Gründen besondere Gefahrenstellen. Zum einen tritt bei Bränden von mit Kunststoff isolierten Kabeln eine intensive Rauchentwicklung unter Emission schädlicher, z.T. giftiger Stoffe auf. Zum anderen kann sich entlang von Kabeltrassen ein Brand schnell ausbreiten und der Brand unter Umständen an eine vom ursprünglichen Brandherd weit entfernte Stelle gleitet werden. Bei Kabelanlagen besteht ferner das Problem, dass bei diesen Kabeln durch thermische Einwirkung oder Abbrand die Wirkung der Isolation nachlässt und durch Kurzschluss eine Unterbrechung des Stromflusses auftreten kann und damit die Kabel zerstört, bzw. funktionsuntüchtig werden.

Elektrische Kabel und Leitungen werden häufig in Fluren verlegt und von dort in die angrenzenden Räume unterteilt. Diese Flure dienen im Brandfall als Flucht- und Rettungswege, die bei Bränden von Kabelinstallationen durch Rauchentwicklung und toxische Brandgase unbenutzbar werden, wobei z. B. brennendes PVC stark korrosive Gase freisetzt. Kabelmassierungen stellen somit insbesondere im Industriebau, in Kraftwerksanlagen, in Krankenhäusern, Groß- und Verwaltungsbauten und generell in Gebäuden mit hoher Installationsdichte ein erhebliches Gefahrenpotential dar. Die Kabelisolierungen sind in diesen Gebäuden oft die maßgebliche Brandlast und verursachen lang andauernde Brände mit Brandraumtemperaturen in ungünstigsten Fällen bis über 1000°C. Aus den genannten Gründen ist Kabeltrassen in Bezug auf Brandschutzmaßnahmen besondere Beachtung zu schenken.

Um diese Gefährdungen der fehlenden Funktionsfähigkeit der Kabel und der starken Brandlasterhöhung durch die Kabel zumindest zeitlich begrenzt zu verhindern, ist es bekannt, die Kabel durch unbrennbare Baustoffe der Baustoffklasse A1 oder A2 räumlich zu trennen, in dem die Kabel z.B. in Installations- und/oder Funktionserhaltkanälen verlegt werden. Dieses erfordert jedoch einen hohen Arbeitsaufwand. Zusätzlich entsteht ein hoher Raumbedarf durch aufwändige Konstruktionen, die zusätzlich zum Gewicht der Kabeltrasse noch das Gewicht der Installations- und/oder Funktionserhaltkanäle berücksichtigen müssen. Dazu werden häufig Kabel und Kabeltrassen mit isolierenden Materialien umwickelt, wie Aluminiumoxid-Silika-Matten oder Mineralwollmatten. Um einen ausreichenden Brandschutz zu erreichen, muss das Material sehr dick sein. Dies führt jedoch zu Problemen hinsichtlich der Abstände zwischen dem geschützten Gegenstand und benachbarten oder überlagerten Gegenständen. Darüber hinaus verursachen diese Materialien aufgrund ihrer thermischen Isoliereigenschaften Probleme bei Normalbetrieb. Eines dieser Probleme wird als "Herabsetzung der Strombelastbarkeit" bezeichnet. Dies bedeutet, dass die durch elektrische Kabel in dem Kabelrohr oder der Kabeltrasse erzeugte Wärme im Bereich der Isolierung nicht mehr abgeführt werden kann, was dazu führt, dass der in diesen Kabeln zulässige sichere Strombetriebspegel verringert wird oder dass eine Überhitzung der Kabel erfolgt. Diese Nachteile machen diese Art des Brandschutzes sehr unflexibel hinsichtlich deren Einsatzbereichs.

Zur Vermeidung dieser Nachteile ist es auch bekannt, für den Schutz elektrischer Kabel Beschichtungen aufzubringen, die im Brandfall unter thermischer Einwirkung intumeszieren, d.h. aufschäumen und so eine Dämmschicht bilden oder die durch physikalische und chemische Prozesse Wärme aufnehmen und so kühlend wirken.

Mit dämmschichtbildenden Beschichtungen ist es möglich, die Teilnahme von Kabeln am Brandgeschehen für 30 Minuten oder länger zu verhindern. Derartige beschichtete Kabel werden oft auf Kabeltrassen verlegt. Hierbei hat es sich jedoch gezeigt, dass bei vertikaler oder geneigter Anordnung der Kabeltrassen auch ein vollständig aufgeschäumter Dämmschichtbildner die Brandausbreitung ohne zusätzliche Maßnahmen nicht verhindern kann. Während der Erwärmung verformen sich die Kabel zwischen den Kabelschellen so stark, dass die Dämmschicht bildende Beschichtung aufreißt und teilweise abplatzt. Entstehender Schaum löst sich dabei ebenfalls von den Kabeln und fällt ab. Bei nach Verlegung der Kabel erfolgter Beschichtung sind die Kabel im Bereich der Schellenkonstruktionen nicht in vollem Umfang zugänglich. Dies hat zur Folge, dass bei vertikaler oder geneigter Anordnung der Kabeltrassen im Brandfall im Bereich der Schellenkonstruktionen nur ein Schaum geringer Dicke entsteht, der als Brandschutz für 30 Minuten nicht mehr ausreicht. Bei Verlegung von PVC-Kabeln treten daher wieder die im Brandfall bekannten Probleme auf.

Es ist auch bekannt, flammwidrig bzw. schwer entflammbar ausgerüstete halogenfreie Kabel zu verwenden, die nur schwer entflammbar und raucharm sind und nur eine geringe Brandweiterleitung besitzen. Diese Kabel sind jedoch sehr teuer und kommen daher nur unter extrem gefährdeten Bedingungen zum Einsatz.

Zur Vermeidung der Nachteile dämmschichtbildender Beschichtungen wurden bei Kabeltrassen Materialen auf die Kabel und Kabelhalterungen aufgebracht, die einen Ablationseffekt zeigen, d.h. unter Hitzeeinwirkung kühlend wirken und keramisieren, wie beispielsweise in der DE 196 49 749 A1 beschrieben. Hierin wird ein Verfahren zur Ausbildung eines Brandschutzes für brennbare oder hitzegefährdete Bauteile beschrieben, wobei die Bauteile mit einer Beschichtung versehen werden, die als Bindemittel ein anorganisches Material aus feingemahlenen hydraulischen Bindemitteln wie Calcium-Silicat, -Aluminat oder -Ferrit enthält, dem Ablativstoffe wie Aluminium- oder MagnesiumHydroxid zugesetzt ist. Nachteil an dieser Maßnahme ist, dass einerseits das Aufbringen des den Ablationseffekt zeigenden Materials zeitintensiv ist und andererseits die Haftung des Materials an den Kabeln und den Kabelhalterungen ein Problem darstellt.

Aus der CN 101 831 116 A ist eine Brandschutzzusammensetzung zur Herstellung eines flammhemmenden Kautschuks bekannt, die unter anderem Magnesiumhydroxid, Triallylcyanurat, Dimercaptothidiazol und Dicumylperoxid enthält. Ferner ist aus der JP 5208046 B2 eine Zusammensetzung für einen Formkörper mit flammhemmenden Eigenschaften oder einem flammhemmenden Muster auf der Oberfläche bekannt, die unter anderem eine Methylmethacrylat-Verbindung, Aluminiumhydroxidpulver, *tert-*Butylperoxymaleinsäure und Glycoldimercaptoacetat enthält.

Andere derzeit auf dem Markt befindlichen Beschichtungssysteme, welche einige der oben erwähnten Nachteile nicht aufweisen sind einkomponentige Beschichtungszusammensetzungen auf der Basis von Polymerdispersionen, die sich endotherm zersetzende Verbindungen enthalten. Nachteilig an diesen Beschichtungen ist zum einen die relativ lange Trocknungsdauer der Beschichtung und damit einhergehende geringe Trockenschichtdicke, da diese Systeme physikalisch, d.h. durch Verdunstung des Lösungsmittels trocknen. Daher sind für dickere Beschichtungen mehrere nacheinander folgende Auftragungen erforderlich, was diese Systeme ebenfalls zeit- und arbeitsintensiv und daher unwirtschaftlich macht.

Der Erfindung liegt daher die Aufgabe zugrunde, ein ablativ wirkendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund des erreichbaren hohen Füllgrades nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine Brandschutz-Zusammensetzung mit einem Bestandteil A, der mindestens eine Verbindung mit einer oder mehreren reaktiven Kohlenstoffmehrfachbindungen, wie eine C-C-Doppelbindung oder eine C-C-Dreifachbindung, pro Molekül und gegebenenfalls mindestens einen Reaktivverdünner enthält, mit einem Bestandteil B, der mindestens eine Thiol-funktionalisierte Verbindung, deren durchschnittliche Anzahl an Thiol-Gruppen pro Molekül mindestens 2 beträgt, und einen Radikalinitiator enthält, und mit einem Bestandteil C, der mindestens ein ablativ wirkendes Brandschutzadditiv, das aus der Gruppe bestehend aus LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AlOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO3)2·3H₂O Scarbroit, Al₁₄(CO₃)₃(OH)₃₆ Hydrogranat, 3CaO·Al₂O3·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon ausgewählt ist, enthält, wobei der Anteil des ablativ wirkenden Brandschutzadditivs in der Gesamtformulierung 40 bis 80 Gew.-% beträgt.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten die Arbeitszeit erheblich reduziert werden kann.

Ein weiterer Vorteil liegt darin, dass die erfindungsgemäße Zusammensetzung einen hohen Füllgrad mit den Brandschutzadditiven aufweisen kann, so dass selbst mit dünnen Schichten eine große isolierende Wirkung erreicht wird. Der mögliche hohe Füllgrad der Zusammensetzung kann selbst ohne die Verwendung von leicht flüchtigen Lösungsmitteln erreicht werden. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25% typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95% der Beschichtung auf dem zu schützenden Substrat.

Im Brandfall erweicht das Bindemittel und die darin erhaltenen Brandschutzadditive zersetzen sich abhängig von den verwendeten Additiven in einer endothermen physikalischen oder chemischen Reaktion unter Bildung von Wasser und inerten Gasen, was zum einen zur Kühlung der Kabel und zum anderen zur Verdünnung der brennbaren Gase oder durch Ausbilden einer Schutzschicht, die das Substrat vor Wärme- und Sauerstoffangriff schützt, führt und zum anderen die Ausbreitung des Feuers durch den Abbrand der Beschichtung verhindert.

Die erfindungsgemäßen Zusammensetzungen zeigen eine ausgezeichnete Haftung an unterschiedlichen Untergründen verglichen mit lösemittel- oder wasserbasierten Systemen, wenn diese ohne Grundierung aufgetragen werden, so dass sie universell eingesetzt werden können und nicht nur an den zu schützenden Leitungen sondern auch anderen Trägermaterialien haften.

Zum besseren Verständnis der Erfindung werden die folgenden Erläuterungen der hierin verwendeten Terminologie als sinnvoll erachtet. Im Sinne der Erfindung:
- ist eine *"reaktive C-C-Doppelbindung oder C-C-Dreifachbindung"* eine C-C-Doppel-oder -Dreifachbindung, die nicht aromatisch ist;
- bedeutet *"ablativ wirkend",* dass bei Einwirken erhöhter Temperaturen, d.h. oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird; dieser Begriff wird gleichbedeutend mit dem Begriff *"endotherm zersetzend"* verwendet;
- *"Reaktivverdünner"* flüssige oder niedrigviskose Verbindungen (Harze), welche andere Verbindungen (Harze) mit höherer Viskosität verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil der gehärteten Zusammensetzung werden.
- *"Radikalinitiator"* eine Radikalquelle, die strahlungsinduziert, thermisch oder mittels eines Katalysators (Beschleunigers) unter Bildung von Radikalen zerfällt;
- *"(Meth)acryl...*/ *...(meth)acryl...",* dass sowohl die "Methacryl.../...methacryl..."- als auch die "Acryl.../...acryl..."-Verbindungen umfasst sein sollen.

Zweckmäßig wird als Verbindung mit reaktiven Kohlenstoffmehrfachbindungen eine Verbindung mit mindestens einer C-C-Doppelbindung oder einer C-C-Dreifachbindung eingesetzt, die radikalisch härten kann und aufgrund der ausbleibenden Homopolymerisation hinreichend lagerstabil ist. Geeignete Verbindungen sind in der WO 2005/100436 A1 und WO 2007/042199 A1 beschrieben, deren Inhalte hiermit in diese Anmeldung aufgenommen werden.

Gemäß einer bevorzugten Ausführungsform der Erfindung ist die Verbindung mit reaktiven Kohlenstoffmehrfachbindungen eine Verbindung mit mindestens einer nicht-aromatischen C-C-Doppelbindung, wie (Meth)acrylat-funktionalisierte Verbindungen, Allylfunktionalisierte Verbindungen, Vinyl-funktionalisierte Verbindungen, Norbornenfunktionalisierte Verbindungen und ungesättigte Polyester-Verbindungen.

Beispiele ungesättigter Polyester-Verbindungen sind dem Artikel von M. Maik et al. J. Macromol. Sei., Rev. Macromol. Chem. Phys. 2000, C40, 139-165 zu entnehmen, in dem eine Klassifikation solcher Verbindungen auf Basis ihrer Struktur getroffen wurde, wobei fünf Gruppen genannt werden: (1) Ortho-Harze, (2) Iso-Harze, (3) Bisphenol-A-fumarate, (4) Chlorendics, und (5) Vinylester-Harze. Davon können ferner noch die sogenannten Dicyclopentadien- (DCPD-) Harze unterschieden werden.

Weiter bevorzugt weist die Verbindung mit reaktiven Kohlenstoffmehrfachbindungen Allyl-, Vinyl-, (Meth)acryl-, Fumarsäure-, Maleinsäure-, Itaconsäure-, Crotonsäure- oder Zimtsäure-Doppelbindungseinheiten auf oder ist die Verbindung mit reaktiven Kohlenstoffmehrfachbindungen ein Diels-Alder-Addukt oder ein Norbornen-Derivat davon oder ein Derivat davon mit einer anderen Verbindung, die bicyclische Doppelbindungen trägt. Beispielhafte Verbindungen sind Vinylester, Allylester, Vinylether, Allylether, Vinylamine, Allylamine, Vinylamide, Ester und Amide der (Meth)acrylsäure, Ester der Fumarsäure und Maleinimide.

Besonders bevorzugt ist die ungesättigte Verbindung aus der Gruppe bestehend aus Trimethylolpropandiallylether, Pentaerythritoltriallylether, Pentaerythritoltriacrylat, Trimethylolpropantriacrylat, Trimethylolpropandiallylether, Phthalsäurediallylester, Succinylsäurediallylester, Bernsteinsäurebis[4-(vinyloxy)butyl]ester, Adipinsäurebis[4-(vinyloxy)butyl]ester, Isophthalsäurebis[4-(vinyloxy)butyl]ester, Terephthalsäurebis[4-(vinyloxy)butyl]ester, Trimellitsäuretris[4-(vinyloxy)butyl]ester, Diethylenglycoldivinylether, 1,4-Cyclohexandimethanoldivinylether, 1,4-Butandioldivinylether, Pentaerythritolallylether, 1,3,5-Triallyl-1,3,5-triazin-2,4,6-trion und Triallylamin ausgewählt.

Besonders bevorzugt werden als Verbindung mit reaktiven Kohlenstoffmehrfachbindungen Verbindungen eingesetzt, die flüssig sind oder eine geringe Basisviskosität (η < 5 Pa·s (T=23°C; *γ̇* = 300 s⁻¹), gemessen nach DIN 53019-1) aufweisen, um die niedrige Viskosität der gefüllten Zusammensetzung sicherzustellen. Bei höher- oder hochviskosen Verbindungen ist die Zugabe eines Reaktivverdünners erforderlich, damit die Viskosität der Zusammensetzung im Scherbereich des Pumpens und Versprühens insgesamt niedrig bleibt.

In einer Ausführungsform der Erfindung enthält die Zusammensetzung daher weitere niederviskose Verbindungen als Reaktivverdünner, um die Viskosität der Zusammensetzung anzupassen, falls erforderlich. Als Reaktivverdünner können, als Reinstoff oder im Gemisch, niederviskose Verbindungen eingesetzt werden, welche mit den Komponenten der Zusammensetzung reagieren. Beispiele sind Allylether, Allylester, Vinylether, Vinylester, (Meth)acrylsäureester und Thiol-funktionalisierte Verbindungen. Reaktivverdünner werden bevorzugt aus der Gruppe ausgewählt, bestehend aus Allylether, wie Allylethylether, Allylpropylether, Allylbutylether, Allylphenylether, Allylbenzylether, Trimethylolpropanallylether, Allylester, wie Essigsäureallylester, Buttersäureallylester, Maleinsäurediallylester, Allylacetoacetat, Vinylether, wie Butylvinylether, 1,4-Butandiolvinylether, *tert*-Butylvinylether, 2-Ethylhexylvinylether, Cyclohexylvinylether, 1,4-Cyclohexandimethanolvinylether, Ethylenglycolvinylether, Diethylenglycolvinylether, Ethylvinylether, Isobutylvinylether, Propylvinylether, Ethyl-1-propenylether, Dodecylvinylether, Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1 .0.²⁶-decan, Dicyclopentenyloxyethylcrotonat, 3-(Meth)acryloyl-oxymethyl-tricylo-5.2.1.0.²⁶-decan, 3-(Meth)cyclopentadienyl(meth)acrylat, Isobornyl(meth)acrylat und Decalyl-2-(meth)acrylat.

Grundsätzlich können auch andere übliche Verbindungen mit reaktiven Doppelbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen.

Je nach Funktionalität der ungesättigten Verbindung können der Vernetzungsgrad des Bindemittels und somit zum einen die Festigkeit der entstehenden Beschichtung, als auch deren elastische Eigenschaften eingestellt werden.

In einer bevorzugten Ausführungsform der Erfindung enthält die Verbindung mit einer oder mehreren reaktiven C-C-Doppelbindungen oder C-C-Dreifachbindungen pro Molekül ferner noch eine Verbindung zur Verhinderung der frühzeitigen Polymerisation der ungesättigten Verbindung, den sogenannten Stabilisator. Als Stabilisator sind erfindungsgemäß die für radikalisch polymerisierbare Verbindung üblicherweise verwendeten Inhibitoren geeignet, wie sie dem Fachmann bekannt sind. Bevorzugt sind die Stabilisatoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert*-butylphenol, 2,4,6-Trimethylphenol, 2,4,6-Tris(dimethylaminomethyl)phenol, 4,4'-Thio-bis(3-methyl-6-*tert-*butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)benzol, 2,2'-Methylen-di-*p-*cresol, Brenzkatechin und Butylbrenzkatechine, wie 4-*tert*-Butylbrenzkatechin, 4,6-Di*-tert-*butylbrenzkatechin, Hydrochinone, wie Hydrochinon, 2-Methylhydrochinon, *2-tert-*Butylhydrochinon, 2,5-Di-*tert*-butylhydrochinon, 2,6-Di-*tert*-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische oder anaerobe, d.h. im Gegensatz zu den phenolischen Inhibitoren auch ohne Sauerstoff wirksame Inhibitoren, kommen vorzugsweise Phenothiazine, wie Phenothiazin und/oder Derivate oder Kombinationen davon, oder stabile organische Radikale, wie Galvinoxyl- und *N*-Oxylradikale in Betracht.

Als *N*-Oxylradikale können beispielsweise solche verwendet werden, wie sie in der DE199 56 509 beschrieben sind. Geeignete stabile *N*-Oxylradikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-*N-*nitrosophenylhydroxylamin, Diethylhydroxylamin ausgewählt werden. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim oder in para-Position zur Hydroxylgruppe substituierte Pyrimidinol- oder Pyridinol-Verbindungen, wie sie in der nicht vorveröffentlichten Patentschrift DE 10 2011 077 248 B1 beschrieben sind, und dergleichen.

Die Inhibitoren können entweder alleine oder als Kombination von zweien oder mehreren davon verwendet werden.

Zweckmäßig kann als Thiol-funktionalisierte Verbindung jede Verbindung verwendet werden, welche über mindestens zwei Thiolgruppen verfügt. Jede Thiolgruppe ist dabei entweder direkt oder über einen Linker an ein Gerüst angebunden, wobei die Thiol-funktionalisierte Verbindung der vorliegenden Erfindung über irgendeines einer breiten Vielzahl von Gerüsten verfügen kann, wobei diese gleich oder unterschiedlich sein können.

Erfindungsgemäß ist das Gerüst ein Monomer, ein Oligomer oder ein Polymer.

In einigen Ausführungsformen der vorliegenden Erfindung umfassen die Gerüste Monomere, Oligomere oder Polymere mit einem Molekulargewicht (Mw) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In bevorzugten Ausführungsformen der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol.

Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der Linker bevorzugt ausgewählt unter den Strukturen (I) bis (XI).

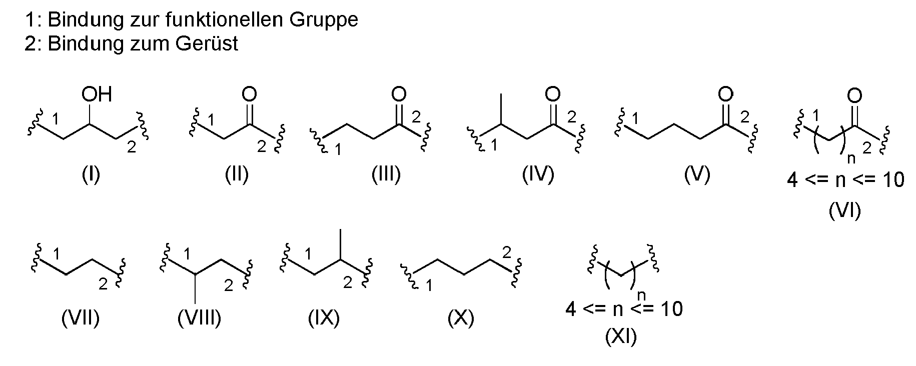

Als Linker für Thiol-funktionalisierte Verbindungen besonders bevorzugt sind die Strukturen (I), (II), (III) und (IV).

Für Thiol-funktionalisierte Verbindungen ist die funktionelle Gruppe die Thiol-Gruppe (-SH).

Besonders bevorzugte Thiol-funktionalisierte Verbindungen sind Ester der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden. In dieser Hinsicht wird Bezug genommen auf die WO 99/51663 A1, deren Inhalt hiermit in diese Anmeldung aufgenommen wird.

Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertesTrimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure® 3-800 (BASF), GPM-800 (Gabriel Performance Products), Capcure® LOF (BASF), GPM-800LO (Gabriel Performance Products), KarenzMT PE-1 (Showa Denko), Cetepox 2200H (CTP), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden.

Analog der Verbindung mit einer oder mehreren reaktiven Kohlenstoffmehrfachbindungen können je nach Funktionalität der Thiolverbindung der Vernetzungsgrad des Bindemittels und somit zum einen die Festigkeit der entstehenden Beschichtung, als auch deren elastische Eigenschaften eingestellt werden.

Die Reaktion zwischen der mindestens einen radikalisch polymerisierbaren Verbindung mit einer oder mehreren reaktiven Kohlenstoffmehrfachbindungen und der mindestens einen Thiol-funktionalisierten Verbindung wird durch einen Radikalinitiator gestartet.

Als Radikalinitiatoren kommen dabei alle dem Fachmann bekannten Verbindungen, die strahlungsinduziert, durch thermischen oder katalytischen Zerfall Radikale bilden, in Betracht. Bevorzugt ist der Radikalinitiator eine Verbindung, die durch thermischen oder katalytischen Zerfall Radikale bilden. Besonders bevorzugt ist der Radikalinitiator eine Verbindung die durch katalytischen Zerfall Radikale bildet.

Beispiele der Photoinitiatoren umfassen Benzoin und substituierte Derivate davon, Benzophenone, 4,4'-Bis(dimethylamino)benzophenon, Dialkoxybenzophenone, Dialkoxyacetophenone, Peroxyester, wie sie beispielsweise in der US 4,616,826 und 4,604,295 beschrieben sind. Beispielhaft können folgende Verbindungen genannt werden: Benzophenon, Acetophenon, Acenapthenchinon, o-Methoxybenzophenon, Thioxanthen-9-on, Xanthen-9-on, 7H-Benz[de]anthracen-7-on, Dibenzosuberon, 1-Napthaldehyd, 4,4'-Bis(dimethylamino)benzophenon, Fluoren-9-on, 1'-Acetonaphthon, 2'-Acetonapththon, Anthrachinon, 1-Indanon, 2-tert-Butylanthrachinon, Valerophenon, Hexanophenon, 8-Phenylbutyrophenon, *p*-Morpholinopropiophenon, 4-Morpholinobenzophenon, 4'-Morpholinodeoxybenzoin-p-diacetylbenzol, 4'-Methoxyacetophenon, Benzaldehyd, 9-Acetylphenanthren, 2-Acetylphenanthren, 10-Thioxanthenon, 3-Acetylphenanthren, 3-Acetylindol, 1,3,5-Triacetylbenzol sowie Gemische davon.

Thermische Radikalinitiatoren umfassen Peroxide, Azonitrile und ähnliche, dem Fachmann bekannte Radikalinitiatoren, wobei Peroxide bevorzugt sind.

Die zur Initiierung der Härtungsreaktion verwendeten Peroxide können irgendwelche Peroxide sein, die dem Fachmann für die Verwendung zur Härtung ungesättigter Verbindungen bekannt sind. Derartige Peroxide beinhalten organische und anorganische Peroxide, entweder fest oder flüssig. Auch Wasserstoffperoxid kann verwendet werden. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können ebenso oligomerer oder polymerer Natur sein. Eine umfangreiche Reihe an Beispielen geeigneter Peroxide kann zum Beispiel in der US 2002/0091214 A1, Absatz [0018], gefunden werden.

Das Peroxid ist bevorzugt ein Hydroperoxid, ein Perether, ein Perester, ein Peranhydrid oder ein Percarbonat, stärker bevorzugt ist das Peroxid aus der Gruppe von Percarbonaten, Perestern und Hydroperoxiden ausgewählt und am stärksten bevorzugt ist das Peroxid ein Monopercarbonat, wie zum Beispiel *tert*-Butylperoxy-2-ethylhexylcarbonat, oder ein Perester, wie zum Beispiel *tert*-Butylperoxybenzoat.

Die erfindungsgemäße Zusammensetzung umfasst bevorzugt ferner eine Übergangsmetallverbindung als Beschleuniger bzw. Härtungskatalysator. Die Anwesenheit einer solchen Übergangsmetallverbindung ist dahingehend vorteilhaft, dass sie den Zerfall des Peroxids und damit die Aushärtung der Harzzusammensetzung beschleunigt. Das Übergangsmetall ist bevorzugt unter den Übergangsmetallen ausgewählt, deren Atomzahlen von einer Atomzahl im Bereich von 22 bis 29 oder einer Atomzahl im Bereich von 38 bis 49 oder einer Atomzahl im Bereich von 57 bis 79 reichen. Am stärksten bevorzugt ist das Übergangsmetall unter V, Mn, Cu, Fe ausgewählt.

Ferner kann die Zusammensetzungen einen Co-Beschleuniger, wie 1,3-Dicarbonylverbindungen, z.B. 1,3-Diketone und Aldehyde, insbesondere Acetylaceton, Benzoylaceton und Dibenzoylmethan; Mono- und Diester, besonders Diethylmalonat und Succinate, Acetoacetate, wie Ethylacetoacetat, Acetoxyacetylethylmethacrylat und dergleichen, enthalten, um die Reaktivität weiter zu erhöhen, falls erforderlich.

Die Wirkungsweise der erfindungsgemäßen ablativ wirkenden Zusammensetzung baut auf einer endothermen physikalischen und/oder chemischen Reaktion auf, wobei Stoffe, die bei deren Zersetzung große Mengen von Energie benötigen, in der Zusammensetzung enthalten sind. Wird die ausgehärtete Zusammensetzung erhöhter Temperatur, wie etwa im Brandfall der eines Feuers ausgesetzt, wird eine Reihe von chemischen und physikalischen Prozessen in Gang gesetzt. Diese Prozesse sind etwa die Freisetzung von Wasserdampf, Veränderung der chemischen Zusammensetzung und die Bildung nichtbrennbarer Gase, die den zur Verbrennung notwendigen Sauerstoff von der Kabeloberfläche fernhalten. All diese Prozesse benötigen eine große Menge Energie, die dem Feuer entzogen wird. Nachdem die Umwandlung aller organischen Bestandteile abgeschlossen ist, hat sich eine stabile Isolationsschicht aus anorganischen Bestandteilen gebildet, die eine zusätzliche isolierende Wirkung hat.

Erfindungsgemäß enthält der Bestandteil C daher mindestens ein ablativ wirkendes Brandschutzadditiv, wobei als Additive sowohl einzelne Verbindungen als auch ein Gemisch von mehreren Verbindungen verwendet werden kann.

Zweckmäßig werden als ablativ wirkende Brandschutzadditive solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°C, wogegen die Wasserabspaltung von Magnesiumhydroxid bei ca. 350°C einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Erfindungsgemäß ist das ablativ wirkende Brandschutzadditiv aus der Gruppe bestehend aus LiNO₃·3H₂O, Na₂CO₃H₂O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO3)2·3H₂O Scarbroit, Al₁₄(CO₃)₃(OH)₃₆ Hydrogranat, 3CaO·Al₂O3·6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren ausgewählt.

In einer bevorzugten Ausführungsform sind die hydrierten Salze ausgewählt aus der Gruppe bestehend aus Al₂(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, MgSO₄·7H₂O, (NH₄)₂SO₄·12H₂O; KAl(SO₄)₂12H₂O, Na₂SiO₃·9H₂O, Mg(NO₂)₂·6H₂O, Na₂CO₃·7H₂O und Gemischen davon (EP 1069172 A).

Besonders bevorzugt sind Aluminiumhydroxid, Aluminiumhydroxidhydrate, Magnesiumhydroxid und Zinkborat, da sie eine Aktivierungstemperatur unterhalb 180°C haben.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Das ablativ wirkende Brandschutzadditiv ist erfindungsgemäß in einer Menge von 40 bis 80 Gew.-% in der Zusammensetzung enthalten sein, wobei die Menge im Wesentlichen von der Applikationsform der Zusammensetzung (Sprühen, Pinseln und dergleichen) abhängt. Um eine möglichst gute Isolation zu bewirken, wird der Anteil des Bestandteils C in der Gesamtformulierung so hoch wie möglich eingestellt.

Die Zusammensetzung kann neben den ablativen Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder Mehrkomponenten-System konfektioniert werden.

In einer bevorzugten Ausführungsform der Erfindung ist die erfindungsgemäße Zusammensetzung als Zweikomponenten-System konfektioniert, wobei der Bestandteil A und der Bestandteil B reaktionsinhibierend getrennt angeordnet sind. Dementsprechend enthält eine erste Komponente, die Komponente I, den Bestandteil A und eine zweite Komponente, die Komponente II, den Bestandteil B. Hierdurch wird erreicht, dass die beiden Bestandteile A und B des Bindemittels erst unmittelbar vor der Anwendung miteinander gemischt werden und die Härtungsreaktion auslösen. Dies macht das System einfacher in der Handhabung.

Die ungesättigte Verbindung ist dabei bevorzugt in einer Menge von 2 bis 95 Gew.-%, in der Komponente I enthalten.

Wird ein Reaktivverdünner verwendet, so ist dieser in einer Menge von 90 bis 10 Gew.-%, vorzugsweise 70 bis 10 Gew.-% in der Komponente I enthalten.

Die Thiol-funktionalisierte Verbindung ist bevorzugt in einer Menge von 0,5 bis 90 Gew.-%, stärker bevorzugt in einer Menge von 2 bis 85 Gew.-% und am stärksten bevorzugt in meiner Menge von 4 bis 75 Gew.-% in der Komponente II enthalten.

Wird ein Inhibitor verwendet, kann dieser in einer Menge von 0,001 bis 1 Gew.-%, bevorzugt 0,01 bis 0,5 Gew.-% und stärker bevorzugt 0,03 bis 0,35 Gew.- %, bezogen auf die Verbindung mit reaktiven Kohlenstoffmehrfachbindungen mit einer oder mehreren reaktiven C-C-Doppelbindungen oder C-C-Dreifachbindungen pro Molekül (Bestandteil A), in der Komponente I enthalten.

Ist der Radikalinitiator ein Gemisch aus einem Peroxid, einem Beschleuniger und gegebenenfalls einem Co-Beschleuniger bzw. Katalysator so ist zweckmäßig der Beschleuniger und der Co-Beschleuniger bzw. der Katalysator reaktionsinhibierend getrennt von dem Peroxid angeordnet. Bei dem bevorzugten Zweikomponenten-System bedeutet dies, dass der Beschleuniger und gegebenenfalls der Co-Beschleuniger bzw. der Katalysator zusammen mit dem Bestandteil A in der Komponente I enthalten sind.

Das Zweikomponentensystem umfasst bevorzugt den Bestandteil A und den Bestandteil B reaktionsinhibierend getrennt in unterschiedlichen Behältern, beispielsweise einer Mehrkammer-Vorrichtung, wie beispielsweise einer Mehrkammer-Kartusche, aus welchen Behältern die beiden Komponenten durch Einwirkung mechanischer Presskräfte oder unter Einwirkung eines Gasdruckes ausgepresst und vermischt werden.

Der Bestandteil C kann dabei als Gesamtmischung oder, sofern mehrere Verbindungen enthalten sind, in Einzelkomponenten aufgeteilt in einer ersten Komponente I und/oder in einer zweiten Komponente II enthalten sein. Die Aufteilung des Bestandteils C erfolgt abhängig von der Verträglichkeit der in der Zusammensetzung enthaltenen Verbindungen, so dass weder eine Reaktion der enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Die Zusammensetzung wird als Paste mit einem Pinsel, einer Rolle oder durch Sprühen auf das Substrat aufgebracht. Dass Substrat kann dabei metallisch sein oder aus einem anderen, nicht metallischen Material bestehen, wie etwa Kunststoff im Fall von Kabeln oder aus Mineralwolle im Fall von Weichschotts, oder aus einer Materialkombination, etwa aus metallischen und nicht metallischen Materialien, wie im Fall von Kabeltrassen. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen führen kann, bzw. bei der Aufnahme von Staub zu einer reduzierten ablativen Wirkung. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren.

Deshalb ist die erfindungsgemäße Zusammensetzung insbesondere als Brandschutzbeschichtung, insbesondere sprühbare Beschichtung für Bauteile auf metallischer und nicht metallischer Basis geeignet. Die erfindungsgemäße Zusammensetzung findet vor allem im Baubereich als Beschichtung, insbesondere Brandschutzbeschichtung für einzelne Kabel, Kabelbündel, Kabeltrassen und Kabelkanäle oder andere Leitungen Verwendung sowie als Brandschutzbeschichtung für Stahlkonstruktionselemente, aber auch für Konstruktionselemente aus anderen Materialien, wie Beton oder Holz.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die vorliegende Erfindung betrifft auch Objekte, die erhalten werden, wenn die erfindungsgemäße Zusammensetzung ausgehärtet ist. Die Objekte haben ausgezeichnete ablative Eigenschaften.

Die folgenden Beispiele dienen der weiteren Erläuterung der Erfindung.

### AUSFÜHRUNGSBEISPIELE

Für die Herstellung von erfindungsgemäßen ablativ wirkenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder während des Versprühens vermischt und appliziert.

Zur Bestimmung der Brandschutzeigenschaften wurden die ausgehärteten Zusammensetzung einer Prüfung nach EN ISO 11925-2 unterzogen. Die Prüfung erfolgt in einem zugfrei aufgestellten Brennkasten Mitsubishi FR-D700SC Electric Inverter. Bei der Prüfung wird im Winkel von 45° eine Kleinbrennerflamme für 30 s auf die Probenoberfläche gerichtet, dies entspricht einer Flächenbeflammung.

Es werden jeweils Proben mit den Abmessungen 11 cm x 29,5 cm und einer Anwendungsdicke von 2-3 mm verwendet. Diese Proben härteten bei Raumtemperatur aus und wurden drei Tage bei 40°C gealtert.

Nach der Alterung von drei Tagen bei 40°C erfolgt die Überprüfung von Entzündlichkeit und Höhe der angegriffenen Fläche.

Die Aushärtungszeit und der Aushärtungsverlauf wurden bestimmt. Dabei wurde mit einem Spatel getestet, wann die Aushärtung der Beschichtung startet.

Für die folgenden Beispiele 1 bis 3 wurde als Bestandteil C Aluminiumtrihydrat (HN 434 der J.M. Huber Corporation, Finnland) verwendet, wobei jeweils 18 g davon verwendet wurden.

### Beispiel 1

**Bestandteil A**

| **Bestandteil** | **Menge [g]** |
|---|---|
| Pentaerythritol(3-mercaptopropionat) | 24,3 |
| Durcal 5 ¹⁾ | 36,0 |
| Trigonox® C ²⁾ | 1,8 |

| | |
|---|---|
| ¹) Calciumcarbonat, gemahlen ²⁾ tert-Butylperbenzoat, 55-%ige wässrige Lösung | |

**Bestandteil B**

| **Bestandteil** | **Menge [g]** |
|---|---|
| Tris-(4-[vinyloxy]butyl)trimellitat | 33,4 |
| Octa-soligen Mangan 10 ³⁾ | 0,3 |
| Acetoaceton | 0,3 |
| Tempol ⁴⁾ | 0,005 |
| Durcal 5 | 36,0 |

| | |
|---|---|
| ³⁾ Mn(II)-octoat ⁴⁾ 4-Hydroxy-2,2,6,6-tetramethylpiperidin-*N*-oxyl | |

### Beispiel 2

**Bestandteil A**

| **Bestandteil** | **Menge [g]** |
|---|---|
| Trimethylolpropantri (3-mercaptopropionat) | 35,1 |
| Durcal 5 | 36,0 |
| Trigonox C | 1,7 |

**Bestandteil B**

| **Bestandteil** | **Menge [g]** |
|---|---|
| Pentaerythritolallylether | 22,6 |
| Octa-soligen Mangan 10 | 0,3 |
| Acetoaceton | 0,3 |
| Tempol | 0,005 |
| Durcal 5 | 36,0 |

### Beispiel 3

**Bestandteil A**

| **Bestandteil** | **Menge [g]** |
|---|---|
| Pentaerythritol(3-mercaptopropionat) | 32,0 |
| Durcal 5 | 36,0 |
| Trigonox C | 1,7 |

**Bestandteil B**

| **Bestandteil** | **Menge [g]** |
|---|---|
| 1,4-Cyclohexandimethynoldivinylether | 25,7 |
| Octa-soligen Mangan 10 | 0,3 |
| Acetoaceton | 0,3 |
| Tempol | 0,005 |
| Durcal 5 | 36,0 |

### Vergleichsbeispiel 1

Als Vergleich diente ein auf wässriger Dispersionstechnologie basiertes kommerzielles Brandschutzprodukt (Hilti CFP S-WB).

**Tabelle 1: Ergebnisse der Bestimmung der Aushärtungszeit, der Entzündung und der Flammenhöhe**

| **Beispiele** | **Vergleich 1** | **1** | **2** | **3** |
|---|---|---|---|---|
| Aushärtungszeit | 24 h | < 1 h | < 1 h | < 1 h |
| Entzündung | ja | ja | ja | ja |
| Flammenhöhe | 150 mm | 40 mm | 41 mm | 44 mm |

## Patentansprüche

1. Brandschutz-Zusammensetzung mit einem Bestandteil A, der mindestens eine Verbindung mit einer oder mehreren reaktiven Kohlenstoffmehrfachbindungen pro Molekül enthält, mit einem Bestandteil B, der mindestens eine Thiol-funktionalisierte Verbindung, deren durchschnittlichen Anzahl an Thiol-Gruppen pro Molekül mindestens 2 beträgt, und einen Radikalinitiator enthält, und einem Bestandteil C, der mindestens ein ablativ wirkendes Brandschutzadditiv, das aus der Gruppe bestehend aus LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AlOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al, Fe)₄CO₃(OH)₄₂·29H₂O (Thaumasit), Ca₃Si(OH)₅(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO3)2·3H₂O Scarbroit, Al₁₄(CO₃)₃(OH)₃₆ Hydrogranat, 3CaO·Al₂O3·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon ausgewählt ist, enthält, wobei der Anteil des ablativ wirkenden Brandschutzadditivs in der Gesamtformulierung 40 bis 80 Gew.-% beträgt.

2. Zusammensetzung nach Anspruch 1, wobei die mindestens eine Verbindung mit reaktiven Kohlenstoffmehrfachbindungen eine oder mehrere C-C-Doppelbindungen enthält und unter Vinylestern, Allylestern, Vinylethern, Allylethern, Vinylaminen, Allylaminen, Vinylamiden, Estern und Amiden der (Meth)acrylsäure, Estern der Fumarsäure, Maleinimiden ausgewählt ist.

3. Zusammensetzung nach Anspruch 2, wobei die mindestens eine Verbindung, die eine oder mehrere C-C-Doppelbindungen enthält, unter Trimethylolpropandiallylether, Pentaerythritoltriallylether, Pentaerythritoltriacrylat, Trimethylolpropantriacrylat, Trimethylolpropandiallylether, Phthalsäurediallylester, Succinylsäurediallylester, Bernsteinsäurebis[4-(vinyloxy)butyl]ester, Adipinsäurebis[4-(vinyloxy)butyl]ester, Isophthalsäurebis[4-(vinyloxy)butyl]ester, Terephthalsäurebis[4-(vinyloxy)butyl]ester, Trimellitsäuretris[4-(vinyloxy)butyl]ester, Diethylenglycoldivinylether, 1,4-Cyclohexandimethanoldivinylether, 1,4-Butandioldivinylether, Pentaerythritolallylether, 1,3,5-Triallyl-1,3,5-triazin-2,4,6-trion oder Triallylamin ausgewählt ist.

4. Zusammensetzung nach einem der vorhergehenden Ansprüche, wobei die mindestens eine Thiol-funktionalisierte Verbindung eine Polythiol-Verbindung mit mindestens drei Thiol-Gruppen pro Molekül ist.

5. Zusammensetzung nach einem der vorhergehenden Ansprüche, wobei die Thiol-funktionalisierte Verbindung aus der Gruppe ausgewählt ist, bestehend aus Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

6. Zusammensetzung nach einem der vorhergehenden Ansprüche, wobei der Radikalinitiator ein anorganisches oder organisches Peroxid ist.

7. Zusammensetzung nach einem der vorhergehenden Ansprüche, wobei die Zusammensetzung ferner einen Reaktivverdünner enthält.

8. Zusammensetzung nach einem der vorhergehenden Ansprüche, wobei die Zusammensetzung ferner einen Beschleuniger enthält.

9. Zusammensetzung nach Anspruch 8, wobei der Beschleuniger eine Kombination aus einer 1,3-Dicarbonylverbindung und einem Metallsalz ist.

10. Zusammensetzung nach einem der vorhergehenden Ansprüche, wobei die Zusammensetzung ferner einen Inhibitor enthält.

11. Zusammensetzung nach einem der vorhergehenden Ansprüche, wobei die Zusammensetzung ferner organische und/oder anorganische Zuschlagstoffe und/oder weitere Additive enthält.

12. Zusammensetzung nach einem der vorhergehenden Ansprüche, wobei die Zusammensetzung als Zwei- oder Mehrkomponenten-System konfektioniert ist.

13. Verwendung der Zusammensetzung nach einem der Ansprüche 1 bis 12 als Beschichtung.

14. Verwendung nach Anspruch 13 für die Beschichtung von Konstruktionselementen.

15. Verwendung nach Anspruch 13 für die Beschichtung von nicht metallischen Bauteilen.

16. Verwendung nach einem der Ansprüche 13 bis 15 als Brandschutzschicht, insbesondere für einzelne Kabel, Kabelbündel, Kabeltrassen und Kabelkanäle oder andere Leitungen oder Weichschotts.

17. Gehärtete Objekte, erhalten durch Härten der Zusammensetzung nach einem der Ansprüche 1 bis 12.

## Claims

1. Fire protection composition comprising a constituent A, which contains at least one compound having one or more reactive carbon multiple bonds per molecule, comprising a constituent B, which contains at least one thiol-functionalized compound, of which the average number of thiol groups per molecule is at least 2, and a radical initiator, and comprising a component C, which contains at least one ablative fire protection additive selected from the group consisting of LiNO₃·3H₂O, Na2CO3H2O (thermonatrite), Na₂CO₃·7H₂O, Na₂CO₃·10H₂O (soda), Na₂Ca(CO₃)₂·2H₂O (pirssonite), Na2Ca(CO₃)2·5H₂O (gaylussite), Na(HCO₃)Na₂CO₃·2H₂O (trona), Na₂S₂O₃·5H₂O, Na₂O₃Si·5H₂O, KF·2H₂O, CaBr₂·2H₂O, CaBr₂·6H₂O, CaSO4·2H₂O (gypsum), Ca(S0₄)·½H₂O (bassanite), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (boehmite), Al₂[SO₄]₃·nH₂O where n = 14-18 (US 4,462,831 B), optionally in a mixture with AlNH₄(SO₄)₂·12H₂O (US5104917A), KAl(SO₄)₂·12H₂O (EP1069172A), CaO·Al₂O₃·10H₂O (nesquehonite), MgCO₃·3H₂O (wermlandite), Ca₂Mg₁₄(Al,Fe)₄Co₃(OH)₄₂.29H₂O (thaumasite), Ca₃Si(OH)₆(SO₄)(CO₃)·12H₂O (artinite), Mg₂(OH)₂CO₃·H₂O (ettringite), 3CaO·Al₂O₃·3CaSO₄·32H₂O (hydromagnesite), Mg₅(OH)₂(CO₃)₄·4H₂O (hydrocalumite), Ca4Al₂(OH)₁₄·6H₂O (hydrotalcite), Mg₆Al₂(OH)₁₆CO₃·4H₂O (alumohydrocalcite), CaAl₂(OH)₄(CO₃)₂·3H₂O (scarbroite), Al₁₄(CO₃)₃(OH)₃₆ (hydrogranat), 3CaO·Al₂O₃-6H₂O (dawsonite), NaAl(OH)CO₃, hydrous zeolites, vermiculites, colemanite, perlites, mica, alkali silicates, borax, modified carbon, graphites, silicas and mixtures thereof, wherein the proportion of the ablative fire protection additive in the overall formulation is 40 to 80 wt.%.

2. Composition according to claim 1, wherein the at least one compound having reactive carbon multiple bonds contains one or more C-C double bonds and is selected from vinyl esters, allyl esters, vinyl ethers, allyl ethers, vinyl amines, allyl amines, vinyl amides, esters and amides of (meth)acrylic acid, esters of fumaric acid, and maleimides.

3. Composition according to claim 2, wherein the at least one compound containing one or more C-C double bonds is selected from trimethylolpropane diallyl ether, pentaerythritol triallyl ether, pentaerythritol triacrylate, trimethylolpropane triacrylate, trimethylolpropane diallyl ether, diallyl phthalate, succinic acid diallyl ester, succinic acid bis(4-(vinyloxy)butyl) ester, adipic acid bis[4-(vinyloxy)butyl] ester, isophthalic acid bis(4-(vinyloxy)butyl] ester, terephthalatic acid bis[4-(vinyloxy)butyl] ester, trimellitic acid tris[4-(vinyloxy)butyl] ester, diethylene glycol divinyl ether, 1,4-cyclohexanedimethanol divinyl ether, 1,4-butanediol divinyl ether, pentaerythritol allyl ether, 1,3,5-triallyl-1,3,5-triazine-2,4,6-trione or triallylamine.

4. Composition according to any of the preceding claims, wherein the at least one thiol-functionalized compound is a polythiol compound having at least three thiol groups per molecule.

5. Composition according to any of the preceding claims, wherein the thiol-functionalized compound is selected from the group consisting of glycol bis(2-mercaptoacetate), glycol bis(3-mercaptopropionate), 1,2-propylene glycol bis(2-mercaptoacetate), 1,2-propylene glycol bis(3-mercaptopropionate), 1,3-propylene glycol bis(2-mercaptoacetate), 1,3-propylene glycol bis(3-mercaptopropionate), tris(hydroxymethyl)methane-tris(2-mercaptoacetate), tris(hydroxymethyl)methane-tris(3-mercaptopropionate), 1,1,1-tris(hydroxymethyl)ethane-tris(2-mercaptoacetate), 1,1,1-tris(hydroxymethyl)ethane-tris(3-mercaptopropionate), 1,1,1-trimethylolpropane tris(2-mercaptoacetate), ethoxylated 1,1,1-trimethylolpropane tris(2-mercaptoacetate), propoxylated 1,1,1-trimethylolpropane tris(2-mercaptoacetate), 1,1,1-trimethylolpropane tris(3-mercaptopropionate), ethoxylated 1,1,1-trimethylolpropane tris(3-mercaptopropionate), propoxylated trimethylolpropane tris(3-mercaptopropionate), 1,1,1-trimethylolpropane tris(3-mercaptobutyrate), pentaerythritol tris(2-mercaptoacetate), pentaerythritol tetrakis(2-mercaptoacetate), pentaerythritol tris(3-mercaptopropionate), pentaerythritol tetrakis(3-mercaptopropionate), pentaerythritol tris(3-mercaptobutyrate), pentaerythritol tetrakis(3-mercaptobutyrate), 2-ethylhexyl thioglycolate, *iso*-octyl thioglycolate, di(n-butyl)thiodiglycolate, glycol di-3-mercaptopropionate, 1,6-hexanedithiol, ethylene glycol bis(2-mercaptoacetate) and tetra(ethylene glycol) dithiol.

6. Composition according to any of the preceding claims, wherein the radical initiator is an inorganic or organic peroxide.

7. Composition according to any of the preceding claims, wherein the composition further contains a reactive diluent.

8. Composition according to any of the preceding claims, wherein the composition further contains an accelerator.

9. Composition according to claim 8, wherein the accelerator is a combination of a 1,3-dicarbonyl compound and a metal salt.

10. Composition according to any of the preceding claims, wherein the composition further contains an inhibitor.

11. Composition according to any of the preceding claims, wherein the composition further contains organic and/or inorganic aggregates and/or further additives.

12. Composition according to any of the preceding claims, wherein the composition is packaged as a two-component or multi-component system.

13. Use of the composition according to any of claims 1 to 12 as a coating.

14. Use according to claim 13 for coating construction elements.

15. Use according to claim 13 for coating non-metal components.

16. Use according to any of claims 13 to 15 as a fire protection layer, in particular for individual cables, cable bundles, cable trays and cable ducts or other lines or soft fittings.

17. Cured objects, obtained by curing the composition according to any of claims 1 to 12.

## Revendications

1. Composition ignifugeante comprenant un constituant A qui contient au moins un composé ayant une ou plusieurs liaisons multiples carbonées réactives par molécule, un constituant B qui est au moins un composé fonctionnalisé thiol dont le nombre moyen de groupes thiol par molécule est d'au moins 2 et qui contient un initiateur radicalaire, et un constituant C qui contient au moins un additif ignifugeant à action ablative, choisi dans le groupe constitué par LiNO₃·3H₂O, Na2CO3H2O (thermonatrite), Na₂CO₃·7H₂O, Na₂CO₃·10H₂O (soude), Na₂Ca(CO₃)2 ·2H₂O (pirssonite), Na₂Ca(CO₃)2·5H₂O (gaylussite), Na(HCO₃)Na2CO₃· 2H₂O (trona), Na₂S₂O₃·5H₂O, Na₂O₃Si·5H₂O, KF·2H₂O, CaBr₂·2H₂O, CaBr₂·6H₂O, CaS₄·2H₂O (gypse), Ca(S₄)·1/2H₂O (bassanite), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgS₄·7H₂O (EP1069172A), Mg(OH)₂, Al(OH)3, Al(OH)3·3H₂O, AlOOH (boehmite), Al₂[S₄]3·nH₂O où n = 14-18 (US 4,462,831 B), éventuellement mélangé avec AlN₄(S₄)₂·12H₂O (US5104917A), KAl(S₄)₂·12H₂O (EP1069172A), CaO·Al₂O·10H₂O(nesquéhonite), MgCO₃·3H₂O (wermlandite), Ca2Mg14(Al Fe)4CO₃(OH)₄₂·29H₂O (thaumasite), Ca3Si(OH)6(S₄)(CO₃)·12H₂O (artinite), Mg₂(OH)₂CO₃·H₂O (ettringite), 3CaO·Al₂O₃·3CaS₄·32H₂O (hydromagnésite), Mg₅(OH)₂(CO₃)₄·4H₂O (hydrocalumite), Ca₄Al₂(OH)₁₄·6H₂O (hydrotalcite), Mg₆Al₂(OH)₁₆CO₃·4H₂O (alumohydrocalcite), CaAl2(OH)4(CO₃)₂·3H₂O (scarbroite), Al₁₄(CO₃)₃(OH)₃₆ (hydrogrenat), 3CaO·Al₂O₃·6H₂O (dawsonite), NaAl(OH)CO₃, les zéolithes, la vermiculite, la colémanite, la perlite, le mica, des silicates alcalins, le borax hydratés, les charbons, les graphites, les acides siliciques modifiés et des mélanges de ceux-ci, la proportion de l'additif ignifugeant à action ablative dans la formulation totale étant de 40 à 80 % en poids.

2. Composition selon la revendication 1, dans laquelle l'au moins un composé ayant des liaisons multiples carbonées réactives contient une ou plusieurs doubles liaisons C-C et est choisi parmi les esters vinyliques, les esters allyliques, les éthers vinyliques, les éthers allyliques, les amines vinyliques, les amines allyliques, les amides vinyliques, les esters et les amides de l'acide (méth)acrylique, les esters de l'acide fumarique et les maléimides.

3. Composition selon la revendication 2, dans lequel l'au moins un composé contenant une ou plusieurs doubles liaisons C-C, est choisi parmi le triméthylolpropane diallyl éther, l'éther triallylique de pentaérythritol, le pentaérythritol triacrylate, le triméthylolpropane triacrylate, le triméthylolpropane diallyl éther, le phtalate de diallyle, l'ester diallylique d'acide succinique, le bis[4-(vinyloxy)butyl]ester d'acide succinique, le bis[4-(vinyloxy)butyl]ester d'acide adipique, le bis (4-(vinyloxy)butyl]ester d'acide isophthalique, le bis[4-(vinyloxy)butyl]ester d'acide téréphthalique, le tris[4-(vinyloxy)butyl]ester d'acide trimellitique, le divinyléther de diéthylèneglycol, le divinyléther de 1,4-cyclohexanediméthanol, le divinyléther de 1,4-butanediol, l'éther allylique de pentaérythritol, le 1,3,5-triallyl-1,3,5-triazine-2,4,6-trione ou l'amine triallylique.

4. Composition selon l'une des revendications précédentes, dans laquelle l'au moins un composé fonctionnalisé thiol est un composé polythiol ayant au moins trois groupes thiol par molécule.

5. Composition selon l'une des revendications précédentes, dans laquelle le composé fonctionnalisé thiol est choisi dans le groupe constitué par le bis(2-mercaptoacétate) de glycol, le bis(3-mercaptopropionate) de glycol, le bis(2-mercaptoacétate) de 1,2-propylèneglycol, le bis(3-mercaptopropionate) de 1,2-propylèneglycol, le bis(2-mercaptoacétate) de 1,3-propylèneglycol, le bis(3-mercaptopropionate) de 1,3-propylène glycol, le tris(2-mercaptoacétate) de tris(hydroxyméthyl)méthane, le tris(3-mercaptopropionate) de tris(hydroxyméthyl)méthane, le tris(2-mercaptoacétate) de 1,1,1-tris(hydroxyméthyl)éthane, le tris(3-mercaptopropionate) de 1,1,1-tris(hydroxyméthyl)éthane, le tris(2-mercaptoacétate) de 1,1,1-triméthylolpropane, le tris(2-mercaptoacétate) de 1,1,1-triméthylolpropane éthoxylé, le tris(2-mercaptoacétate) de 1,1,1-triméthylolpropane propoxylé, le tris(3-mercaptopropionate) de 1,1,1-triméthylolpropane, le tris(3-mercaptopropionate) de 1,1,1-triméthylolpropane éthoxylé, le tris(3-mercaptopropionate) de triméthylolpropane propoxylé, le tris(3-mercaptobutyrate) de 1,1,1-triméthylolpropane, le tris(2-mercaptoacétate) de pentaérythritol, le tétrakis(2-mercaptoacétate) de pentaérythritol, le tris(3-mercaptopionate) de pentaérythritol, le tétrakis(3-mercaptopropionate) de pentaérythritol, le tris(3-mercaptobutyrate) de pentaérythritol, le tétrakis(3-mercaptobutyrate) de pentaérythritol, le thioglycolate de 2-éthylhexyle, le thioglycolate d'*iso*-octyle, le thiodiglycolate de di(n-butyle), le di-3-mercaptopropionate de glycol, le 1,6-hexandithiol, le bis(2-mercaptoacetate) d'éthylèneglycol et le tétra(éthylèneglycol)dithiol.

6. Composition selon l'une des revendications précédentes, dans laquelle l'initiateur radicalaire est un peroxyde inorganique ou organique.

7. Composition selon l'une des revendications précédentes, la composition comprenant en outre un diluant réactif.

8. Composition selon l'une des revendications précédentes, la composition comprenant en outre un promoteur.

9. Composition selon la revendication 8, dans laquelle le promoteur est une combinaison d'un composé 1,3-dicarbonyle et d'un sel métallique.

10. Composition selon l'une des revendications précédentes, la composition comprenant en outre un inhibiteur.

11. Composition selon l'une des revendications précédentes, la composition comprenant en outre des additifs organiques et/ou inorganiques et/ou d'autres additifs.

12. Composition selon l'une des revendications précédentes, la composition étant conditionnée sous la forme d'un système à deux ou plusieurs composants.

13. Utilisation de la composition selon l'une des revendications 1 à 12 comme revêtement.

14. Utilisation selon la revendication 13, pour le revêtement d'éléments de construction.

15. Utilisation selon la revendication 13, pour le revêtement de composants non métalliques.

16. Utilisation selon l'une des revendications 13 à 15 comme couche ignifugeante, en particulier pour des câbles individuels, des faisceaux de câbles, des lignes de câbles et les chemins de câbles ou d'autres conduites ou cloisonnements souples.

17. Objets durcis obtenus par durcissement de la composition selon l'une des revendications 1 à 12.
